# EUROPÄISCHE PATENTSCHRIFT

(11) **EP 3 172 988 B1**
(45) Veröffentlichungstag und Bekanntmachung des Hinweises auf die Patenterteilung: **20.03.2024**
(21) Anmeldenummer: 16169964.0
(22) Anmeldetag: 17.05.2016
(51) Int. Cl.: A46D 1/00, A01M 21/04

(54) **BESEN MIT UNKRAUTBEKÄMPFENDER WIRKUNG**
BROOM WITH WEEDKILLING ACTION
BALAI A EFFET HERBICIDE

(30) Priorität: 25.11.2015 DE 202015106426 U
(43) Veröffentlichungstag der Anmeldung: 31.05.2017
(73) Patentinhaber: Wehner, Daniel, 97797 Wartmannsroth (DE); Müller, Manfred, 97795 Schondra (DE)
(72) Erfinder: Wehner, Daniel, 97797 Wartmannsroth (DE)
(74) Vertreter: Pöhner, Wilfried Anton

(56) Entgegenhaltungen:
- EP-A1- 0 058 611
- EP-A1- 2 127 555
- CH-A- 162 962
- CN-U- 203 027 970
- DE-T5-112013 004 903
- DE-T5-112013 004 903
- FR-A1- 2 681 313
- US-A1- 2008 110 471

## Beschreibung

Die vorliegende Erfindung betrifft einen Besen umfassend eine Mehrzahl flexibler Borsten und/oder Lamellen.

Obwohl die meisten Menschen grundsätzlich den Anblick von pflanzlichem Grün in Haus und Garten, als beruhigend und erfrischend schätzen, gibt es dort doch Stellen bzw. Flächen die von Bewuchs frei bleiben sollen. So sprießen zum Beispiel zwischen den Fugen gepflasterter Wege oder Einfahrten, aus Rissen in betonierten oder asphaltierten Flächen oder auch aus Fugen zwischen Wänden und ebenen Flächen in kurzer Zeit diverse Kleinpflanzen hervor, wie zum Beispiel Gräser und Kräuter in Frühjahr und Sommer und Moos oder Flechten im Herbst und Winter. Diese lassen ein Grundstück für einen Betrachter leicht ungepflegt oder verwahrlost wirken. Dies gilt insbesondere für freie, nicht überdachte Flächen, die direkt der Witterung ausgesetzt sind, wodurch einerseits Keimstellen wie Risse, Ritzen und der gleichen leichter entstehen können und andererseits die Versorgung mit (Regen)Wasser und Sonnenstrahlung das Pflanzenwachstum entsprechend begünstigt.

Das Beseitigen und Freihalten besonders größerer Flächen von solch ungewollter Vegetation ist nach derzeitigem Stand mit einem größerem Aufwand verbunden. Aus allen entsprechenden Stellen, Ritzen oder Fugen muss zunächst der vorhandene Bewuchs von Hand durch Ausreißen oder -bürsten entfernt werden. Soll danach ein Neubewuchs verhindert werden muss in regelmäßigen Abständen entweder diese Reinigung wiederholt oder aber ein Unkrautbekämpfungsmittel oder Herbizid gezielt auf den fraglichen Stellen oder zumindest ungezielt auf der ganzen Fläche ausgebracht werden. Diese Arbeit kommt zu anderen Reinigungstätigkeiten, wie Putzen oder Fegen zum Entfernen loser oder nur leicht anhaftender Verschmutzungen wie Staub, Sand oder Laub, hinzu und stellt einen meist unangenehmen Mehraufwand dar.

Da in Privathäusern diese Tätigkeiten, also auch gegebenenfalls ein Herbizideinsatz, von nicht fachkundigen Personen durchgeführt werden, kommt eine Überdosierung mit den entsprechenden negativen Konsequenzen für die Umwelt durchaus vor.

Es ist auch von Nachteil, wenn für beide Tätigkeiten, die des Unkrautentfernens und die des Freihaltens der Fläche von losen Verschmutzungen, verschiedene Werkzeuge benötigt werden: einmal zum Jäten Bürsten, zum Ausbringen des Herbizids, welches üblicherweise ein wasserlöslicher Form vorliegt damit es von den zu beseitigenden Pflanzen aufgenommen und biologisch wirksam werden kann, Sprüheinrichtungen oder ein Sprühaufsatz für eine Reinigungsmaschine und zum Reinhalten der Fläche ein Handkehrbesen oder eine Kehrmaschine.

Nach dem in den Offenlegungsschriften EP 0 058 611 A1 und FR 2 681 313 A1 offenbarten Stand der Technik können Besen oder sonstige Bodenpflegebürsten mit einem separaten Reservoir verbunden werden, aus welchem Herbizide in flüssiger Form zugeführt werden. EP 0 058 611 A1 offenbart eine waagerecht um ihre Längsachse drehbar gelagerte, zylinderförmige Bürste, welcher über ein Befeuchtungsmittel aus einem separat angeordneten Reservoir eine herbizidal wirksame Flüssigkeit zugeführt wird, welche die Borstenbüschel über Kapillarwirkung befeuchtet.

FR 2 681 313 A1 offenbart ein in einen Griff, z.B. einen Besenstil, integriertes Flüssigkeitsbehältnis, welches über eine Mechanik auf Knopfdruck des Anwenders an seinem unteren Ende über ein Ventil flüssigen Wirkstoff freigibt.

Die Patentschrift CH 162962 offenbart ein Reinigungsgerät mit Borsten in Form eines Besens umfassend ein Vielzahl in einer Holzgrundplatte gehaltener Borstenbündelkränze, wobei ein Teil der Borsten aus Metalldrähten bestehen soll. Als Material für die Metalldrähte wird, unter anderem, Kupfer und Phosphorbronze vorgeschlagen. Die Borsten und Metalldrähte können in den Bündeln gemischt oder voneinander getrennt angeordnet sein. Der beabsichtigte Effekt ist, dass die Metalldrähten den Borsten Festigkeit und die Fähigkeit, sich nach dem Umbiegen wieder aufzurichten, verleihen sollen.

Die europäische Veröffentlichungsschrift EP 2 127 555 A1 betrifft eine Borste mit einem als Einzeldraht ausgebildeten Drahtkern aus Metall, etwa Kupfer, und eine den Drahtkern umgebende, außenliegende Umhüllung aus Kunststoff sowie eine Reinigungsbürste mit Büscheln derartiger Borsten. Die Kunststoffhülle soll die Metalldrahtborste weniger korrosions- und bruchanfällig machen.

Die veröffentlichte Patentanmeldung US 2008 0110471 A1 zeigt einen Frisierkamm mit drei Reihen von Borsten, wobei eine Kombination von natürlichen und künstlichen Borsten verwendet ist. Die künstlichen Borsten können, unter anderem, Kupfer enhalten, beispielsweise damit überzogen sein, um eine antibakterielle Wirkung bereitzustellen.

Vorliegende Erfindung stellt sich dementsprechend die Aufgabe, ein Werkzeug zu entwickeln, welches den Arbeitsaufwand für das Reinigen und Unkrautfreihalten von Straßen, Wegen, Höfen, Einfahrten und anderer geschlossener Flächen deutlich verringert.

Gelöst wird diese Aufgabe durch einen Besen mit den im Anspruch 1 angegebenen Merkmalen. Der physische Aufbau eines Besens, aus Borsten und/oder Lamellen, die z.B. in Büscheln in eine Haltepalette eingesteckt oder einfach mittels eines Drahtes oder einer Schnur als Garbe zusammengehalten und an einem Steil befestigt sind, ist aus dem Stand der Technik hinlänglich bekannt und hier nicht weiter von Interesse.

Der erfindungsgemäße Besen ist durch die Ansprüche definiert.

Das Wesentliche an dem erfindungsgemäßen Besen ist, dass die Borsten oder Lamellen chemisch so zusammengesetzt sind, dass der beim Gebrauch unvermeidlich entstehende Abrieb unter den richtigen Umständen, besonders einem ausreichenden Feuchtigkeitsniveau, einen herbizidalen Effekt entwickeln kann. Dies wird dadurch erreicht, dass in den Borsten oder Lamellen chemische Agenzien enthalten sind, die entweder direkt eine Unkrautvernichtende oder zumindest (wachstums)hemmende Wirkung haben können, oder durch Witterungseinflüsse wie Sonnenstrahlung, Oxidation mit Luftsauerstoff oder durch andere chemische Reaktion z.B. mit im Regenwasser enthaltenen Stoffen in eine Form mit einer solchen Wirkung überführt werden.

Beim Fegen oder Kehren reiben die Borsten unweigerlich an dem zu reinigenden Untergrund und je nach Härte und Flexibilität der Borsten, Härte und Rauigkeit des Untergrundes sowie der beim Kehren ausgeübten Kraft (in Betrag und Richtung) kommt es zur Bildung von Abrieb, die Borsten oder Lamellen verlieren also Material, welches in Form mehr oder minder feinen Staubes auf die zu reinigende Fläche fällt. Dieser wird durch fortgesetztes Kehren verteilt und zwar so, dass dort am meisten Abrieb zu liegen kommt, wo am intensivsten gekehrt wird. Dies sind üblicherweise Ecken, Kanten oder in anderer Weise verwinkelte Stellen, in denen sich Schmutz und Laub fangen, aber auch ebenso Unkraut Schutz und ein gutes Wachstumsumfeld bieten. Dies bedeutet, dass vorliegende Erfindung in vorteilhafter Weise die Reinigung der Fläche mit einer gefährdungsangepassten Ausbringung eins Herbizids verbindet.

Als wesentliche vorteilhafte Eigenschaft, ist bei dem erfindungsgemäßen Besen dieser Abrieb in der Lage, eine herbizidale Wirkung zu entfalten. Da Herbizide zur Entfaltung ihrer Wirkung von Pflanzen aufgenommen werden müssen, was am effektivsten über die wasseraufnehmenden Wurzeln geschieht, sollten Herbizide gut wasserlöslich sein. Ist die Fläche weitgehend trocken, kann ein Herbizid also nicht oder kaum wirken. Wird jedoch durch natürlichen Regen oder auch eine künstliche Wässerung Wasser zugeführt, lösen sich die herbizidalen Agenzien und sickern mit dem abfließenden Wasser in Ritzen und Spalten und werden dabei genau dorthin vermehrt getragen, wo für Unkraut die besten Wachstumsvorrausetzungen bestehen, d.h. die Bekämpfung erfolgt natürlicherweise gezielt.

Bei einer gleichmäßigen Wässerung (konstantes Wasservolumen pro Fläche und Zeit) ist die Rate des aus dem Abrieb gelösten Herbizids im Wesentlichen proportional zur Oberfläche aller Abriebteilchen, wird also im Wesentlichen bestimmt durch die Korngrößenverteilung. Diese eine Häufigkeitsverteilung, die die Zahl der Abriebteilchen mit einer bestimmten Größe (Volumen) beschreibt. Da die Teilchenform variabel ist, ergibt sich daraus zunächst noch nicht eindeutig die Gesamtoberfläche. Nimmt man jedoch als eine einfachste Näherung eine annähernde Kugelform für die Abriebteilchen an, so ergibt sich aus dieser Korngrößen/ Kornvolumenverteilung eine in der Praxis recht gute Abschätzung für die tatsächliche wirksame Gesamtoberfläche. Diese ändert sich im Laufe der Zeit durch die Witterungseinflüsse, einmal das Auflösen durch Wasser, mechanisches Zerreiben, Sonnenstrahlung und chemische Einwirkung. Es ist denkbar, durch gezielte Beeinflussung der Materialeigenschaften der Borsten oder Lamellen des erfindungsgemäßen Besens, eine anfängliche Korngrößenverteilung so zu wählen, das der Herbizideintrag bestimmte gewünschte Eigenschaften aufweist, z.B. zu Beginn besonders hoch und danach in etwa konstant ist oder durchweg stetig abnimmt.

Es ist auch nützlich, wenn die Lamellen oder Borsten des erfindungsgemäßen Besens unterschiedliche, im Allgemeinen kehrrichtungsabhängige Abrieb- und elastische Eigenschaften aufweisen, sich also in eine Richtung leichter und in eine andere schwerer Biegen lassen und auch die Menge des Produzierten Abriebs (bei gegebenem Anpressdruck) von der ,Strichrichtung' abhängig ist. Somit wäre es z.B. möglich den Besen je nach gewünschtem Herbizideintrag vorwiegend in die eine oder in eine andere Richtung zu verwenden.

Als herbizidales Agens oder als Vorstufe eines solchen kommen verschiedene Substanzen in Frage. Besonders günstig, altbewährt und einfach in einen Besen bzw. Borsten oder Lamellen zu integrieren ist jedoch Kupfer bzw. geeignete Kupferverbindungen, insbesondere Kupfersulfat (CuSO₄), Kupfersulfide (CuₓS) oder Kupferoxide (CuₓO). Diese sind schon von alters her für ihre unkrautbekämpfende Wirkung bekannt, und besitzen auch eine akzeptable Umweltverträglichkeit, was zum Beispiel daraus ersichtlich ist, dass sie auch im Biolandbau, bei entsprechend moderater Verwendung, zugelassen sind und eingesetzt werden. Das im Endeffekt herbizidal wirksame Agens wäre in allen Fällen hauptsächlich Kupfersulfat, welches bei einem Einsatz einer der anderen Verbindungen durch chemische Reaktion (Oxidation mit Luftsauerstoff bzw. Sulfidierung durch in der Luft und hauptsächlich im Regenwasser enthaltene Schwefelsäure oder -salzen) erst im Laufe der Zeit gebildet werden. Als zusätzlichen Vorteil von Kupferverbindungen als herbizidalem Agens eröffnet sich somit eine weitere Möglichkeit den Herbizideintrag zu steuern, nämlich indem ein geeignetes Mischungsverhältnis zwischen den oben genannten Verbindungen verwendet wird.

In einer bevorzugten Ausführung würden die Kupferverbindungen den Kunststoffborsten oder -lamellen als Additiv zugesetzt. Eine Beschichtung der Borsten, oder mit einer Kupferverbindung gefüllte Borsten und/oder Lamellen sind ebenfalls denkbar.

Auch reines Kupfer kann verwendet werden, entweder zugemischt, als Kern oder als Beschichtung von ansonsten aus Kunststoff bestehenden Borsten oder auch als reine Kupferdrähte oder -lamellen. Diese wären sehr einfach in der Herstellung und Verwendung, haben jedoch gegenüber Kunststoffborsten den Nachteil, dass insgesamt weniger Abrieb entsteht und auch eine Richtungsabhängigkeit der Abriebeigenschaften schwer zu realisieren wäre.

Im Folgenden sollen vorteilhafte Weiterbildungen des erfindungsgemäßen Besens, welche einzeln oder in Kombination realisierbar sind, näher erläutert werden.

Als besonders einfach zuzusetzende Stoffklasse mit verlässlicher herbizidaler Wirkung haben sich Kupferverbindungen, insbesondere Kupfersulfat (CuSO₄), Kupfersulfide (CuₓS) oder Kupferoxide (CuₓO), aber auch reines Kupfer bewährt. Letztere drei würden beim Einsatz als Zusatz erst durch entsprechende chemische Reaktionen mit Luftsauerstoff bzw. im Regenwasser gelösten Substanzen in das biologisch aktive, hervorragend wasserlösliche Kupfersulfat umgewandelt. Alle könnten z.B. in fein zerstäubter Form bei der Herstellung der Kunststoffborsten oder -lamellen des Besens zugesetzt werden.

In einer weiteren vorteilhaften, weil sehr einfach umsetzbaren, Ausführung vorliegender Erfindung bestehen zumindest ein Teil der Borsten oder Lamellen des Besens aus reinem Kupfer, also in Form von Kupferdrähten und/oder dünnen Plättchen bzw. Blechen. Dies hat den Vorteil, dass keine spezielle Kunststoffmischung mit Kupferverbindungszusatz angesetzt und zu Borsten oder Lamellen extrudiert werden muss, sondern es können im Handel erhältliche Standardkunststoffborsten und Kupferdrähte verwendet werden. Bei einem häufig verwendeten Besentyp, bei dem die Borsten in Form einer Mehrzahl von Büscheln in eine Halteplatte eingesteckt sind, ist es dabei denkbar, Kunststoffborsten und Kupferdrähte innerhalb eines Borstenbüschels gemischt, oder aber Büschel die jeweils entweder aus Kunststoffborsten oder Kupferdrähten bestehen, einzusetzen.

Um einer ungleichmäßigen Abnutzung beider Borstenarten, welche die Funktion des Besens vorzeitig einschränken könnte, vorzubeugen, ist es angebracht, die Abriebeigenschaften beider Arten von Borsten einander anzupassen. Dies lässt sich hierbei auf zwei Wegen erreichen, die auch in Kombination angewandt werden können. Zum einen können Kunststoffborsten mit der Festigkeit bzw. Beständigkeit von Kupferdraht gewählt werden. Zum anderen lassen sich auch durch Wahl einer geeigneten Kupferlegierung die Abriebeigenschaften der Kupferdrahtborsten in gewissen Grenzen wählen. Darüber hinaus gibt es aber auch einen natürlichen Mechanismus, der geeignet ist, die Borstenlänge beider Borstenarten in etwa gleich zu halten. Dieser besteht darin, dass die längeren Borsten, egal ob es sich dabei um die Kunststoff oder die Kupferdrahtborsten handelt, eine größere Reibung und damit einen, zumindest gegenüber der Situation in der alle Borsten gleich lang sind, erhöhten Abrieb erfahren. Dieser Mechanismus kann die Borstenlänge jedoch nur bei genügend kleinen Differenzen der Abriebeigenschaften in etwa gleichlang halten. Ist der Unterschied in der Festigkeit zu groß, wird sich dauerhaft ein gewisser Längenunterschied einstellen, bei dem die weicheren Borsten im Mittel immer ungefähr um einen gewissen Betrag kürzer sind als die Härteren. Aus diesem Grund ist die oben beschriebene approximative Angleichung der Abriebeigenschaften angebracht, falls daran ein Interesse besteht, dass die Borstenlängen beider Arten von Borsten im Laufe der Lebensdauer des Besens im Mittel immer etwa gleich lang bleiben.

In einer weiteren vorteilhaften Ausführung lehrt vorliegende Erfindung die Verwendung von Borsten und/oder Lamellen, die entweder innen einen Kern aus reinem Kupfer und/oder außen eine Kupferbeschichtung besitzen. Solche Borsten sind durchaus zusammen mit den oben beschriebenen Borsten aus reinem Kupfer oder aus mit Kupfer oder einer Kupferverbindung versetztem Kunststoff einsetzbar, jedoch ist es in der Regel für eine vereinfachte Herstellung vorteilhaft, wenn man ausschließlich Borsten eines Typs einsetzt.

Werden Borsten verschiedenen Typs in einem Besen zusammen verwendet, ergibt es sich meist automatisch, dass sie verschiedene Abriebeigenschaften besitzen. Dies kann störend sein, wenn sich zum Beispiel ein Borstentyp wesentlich schneller abnutzt als der andere, wodurch sich nach einiger Zeit Längenunterschiede ergeben, die die Funktion des Besens, also einen sauberen Kehrstrich zu ermöglichen, beeinträchtigen können. Ebenso kann aber auch die Menge des Kupfer- bzw. herbizidhaltigen Abriebs mit der Zeit und dem Grad der Abnutzung des Besens variieren, was üblicherweise nicht gewollt ist.

Darum empfiehlt vorliegende Erfindung in einer weiteren Ausführungsform, die Abriebeigenschaften der Borsten gezielt einzustellen. Dies kann in der oben angedeuteten Form eines Härteangleichs zwischen verschiedenen Borstentypen erfolgen, aber auch bei Einsatz nur eines einzigen Borstentyps sinnvoll eingesetzt werden, um zum Beispiel die sich aus der ungleichen Verteilung des mechanischen Drucks ergebende ungleichmäßige Abnutzung auszugleichen. Wird ein Besen immer in gleicher Weise verwendet, zum Beispiel mit erhöhtem Druck auf die Kanten oder gar eine bestimmte Kante, dann nutzen sich die Borsten dort schneller ab. Dies ließe sich ausgleichen, indem man an dieser Stelle härtere Borsten bzw. Borsten niedrigeren Abriebs einsetzt. Im Allgemeinen kann man sagen, dass in der Praxis die Borsten an der Kante bzw. der Außenseite des Besens einen erhöhten Anpressdruck und damit eine erhöhte Abnutzung erfahren, weswegen man sinnvollerweise dort abriebfestere Borsten einsetzen könnte.

Auch ist es denkbar, Borsten zu verwenden, deren Abriebeigenschaften sich je nach Strichrichtung unterscheiden, es z.B. eine Richtung gibt, in der sie sich besonders leicht abnutzen und eine andere, üblicherweise gegenüber der ersten entgegengesetzte, also um 180Grad versetzte, Richtung in der die Abnutzung am langsamsten voranschreitet. Wird der Besen so zusammengefügt, dass diese 'Hauptabnutzungsrichtungen' aller Borsten in etwa übereinstimmen, erhält man einen Besen bei dem sich in Konsequenz durch die Wahl der Verwendungsrichtung die Menge des Abriebs und damit der Herbizideintrag in die zu reinigende Fläche kontrollieren lässt. Zum Beispiel kann zu einer (Jahres-)Zeit mit beschleunigtem Pflanzenwachstum (Frühjahr, Sommer) der Besen, wenigstens vorwiegend, in die Richtung schneller Abnutzung verwendet werden, wodurch sich ein hoher Herbizideintrag ergibt, aber auf der anderen Seite der Besen auch schneller ,altert'. Ist das Pflanzenwachstum Witterungs- bzw. Jahreszeits- oder auch Ortsbedingt verlangsamt, z.B. in einem überdachten Teil eines Hofs oder in einer Garage, wo aufgrund fehlenden Regens oder Sonne Unkraut natürlicherweise nicht so gut gedeiht, kann der Besenstrich entgegen der Hauptabnutzungsrichtung, also in die Richtung minimalen Abriebs geführt werden, so dass sich vorteilhafterweise die Lebensdauer des Besens verlängert und auch kein herbizid- bzw. kupferhaltiger Staub an einer Stelle entsteht, wo er stört oder zumindest nicht benötigt wird.

Unter dem Einfluss der Witterung zersetzt sich der beim Kehren entstandene Abrieb natürlicherweise durch mechanische, chemische und Strahlungseinflüsse. Dementsprechend ändert sich die Menge an Herbizid die bei einer gleichmäßigen Wässerung pro Zeit an die Umgebung abgegeben wird. Bei einer homogenen Verteilung des Herbizids bzw. Stoffes mit herbizidaler Wirkung im Borstenmaterial, ist diese Eintragsmenge bei gleichmäßiger Wässerung im Wesentlichen proportional zur Gesamtoberfläche aller zu dieser Zeit (noch) vorhandener Abriebteilchen. Diese wiederum ist im Wesentlichen bestimmt durch die Korngrößenverteilung, welche sich durch die zuvor genannten Einflüsse von einer direkt nach dem Kehren vorliegenden Anfangsverteilung witterungsabhängig zu kleineren Korngrößen verschiebt und auch deformiert. Das heißt im Laufe der Zeit werden größere Abriebteilchen oder -körnchen kleiner und kleine lösen sich ganz auf.

In einer weiteren vorteilhaften Ausführungsform lehrt vorliegende Erfindung bei der Wahl des Borstenmaterials, sowie der Anwendung des Besens darauf zu achten, dass die anfängliche Korngrößenverteilung des beim Kehren entstehenden Abriebs dergestalt ist, dass der Herbizideintrag über die Zeit hinweg bestimmte gewünschte Kriterien aufweist. So ist z.B. als vorteilhaft denkbar, dass zu Beginn eine kurze Phase mit hoher Dosis vorhandenes Unkraut abtötet und eine anschließende Phase mit niedrigerem Eintrag Keime am Wachsen hindert. So könnte bei gleichem Gesamteintrag die Wirkdauer verlängert werden oder eine bestimmte Wirkdauer mit niedrigerem, und damit gewässerschonenderem Gesamteintrag erreicht werden.

Ein solcher zeitlicher Verlauf des Herbizideintrages würde erreicht, wenn die anfängliche Korngrößenverteilung eine sehr hohe Zahl von Abriebteilchen kleinen Durchmessers und eine im Vergleich deutlich geringere Zahl größerer Teilchen aufweist. Ist dieser Unterschied zwischen der Zahl kleinerer und größerer Teilchen weniger ausgeprägt, ergibt sich ein gleichmäßigerer Herbizideintrag im Verlauf der Zeit, was unter bestimmten Umständen ebenfalls gewünscht sein könnte.

Weitere Merkmale, Eigenschaften und Vorteile vorliegender Erfindung ergeben sich aus den im Folgenden anhand der Abbildungen erläuterten bevorzugten Ausführungsbeispielen. Diese dienen nur der Illustration und sollen die Erfindung in keiner Weise in ihrer Allgemeinheit einschränken.

Es zeigen
- Figur 1:: perspektivische Ansicht einer Ausführungsform des erfindungsgemäßen Besens mit herbizidalen Borsten
- Figur 2:: schematische Untersicht einer weiteren Ausführungsform des erfindungsgemäßen Besens mit Lamellen und Borsten
- Figur 3:: schematische Querschnitte durch Borsten mit Richtungsabhängigen elastischen und Abriebeigenschaften

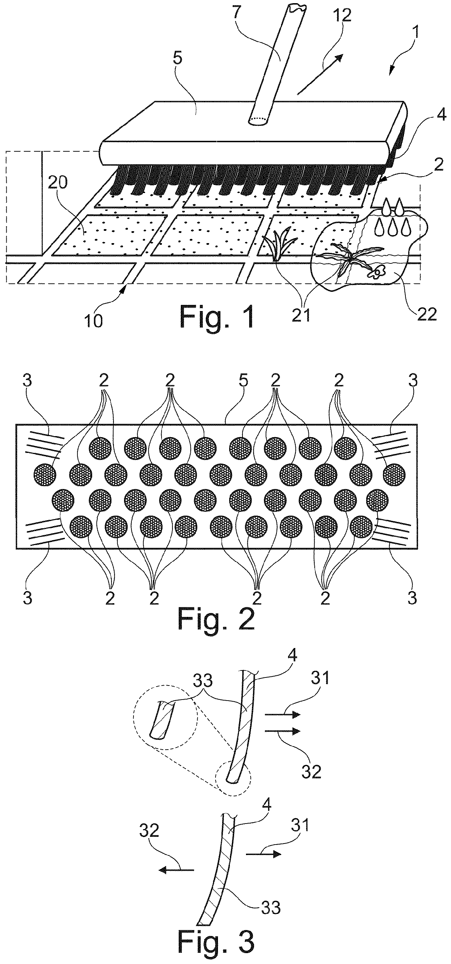

Figur 1 zeigt in perspektivischer Seitenansicht eine bevorzugte Ausführungsform eines erfindungsgemäßen Besens 1 bestehend aus einer Halteplatte 5, welche vorteilhafterweise aus Holz, Kunststoff oder Aluminium gefertigt ist, mit einem auf der Oberseite mittig befestigten Stiel 7 und zu einer Vielzahl von Büscheln 2 zusammengefassten, auf der Unterseite der Halteplatte 5 eingesteckten Borsten 4, welche ein herbizidal oder fungizidal wirkendes Agens, oder zumindest die Vorstufe eines solchen enthalten. Wird der Besen zum Reinigen eines Untergrundes 20 eingesetzt, aus dem Unkraut 21, also nicht erwünschte Vegetation, hervorwächst oder solches Unkraut am Wachsen gehindert werden soll, so wird der Besen auf selbigen Untergrund 20 gepresst und unter Krafteinsatz z.B. in die angedeutete Kehrstrichrichtung 12 geführt. Dabei reiben die Borsten 4 gegen die Oberfläche 20 und nutzen sich dabei ab, d.h. es entsteht Abrieb 10 in Form eines mehr oder minder feinen Staubes, der durch den Kehrvorgang selbst gewissermaßen automatisch gleichmäßig verteilt wird bzw. sogar vorteilhafterweise so verteilt wird, dass dort mehr Abrieb 10 zu liegen kommt, wo mehr oder mit größerem Energieeinsatz gekehrt wird. Diese Stellen entsprechen häufig auch denjenigen, an denen ein Unkrautwachstum begünstigt ist, weil dort Fugen, Risse oder Kanten vorliegen. Der Abrieb 10 zersetzt sich mit der Zeit durch mechanische, strahlungs- und chemische Witterung. Insbesondere wird bei Kontakt mit Wasser 22, z.B. Regen aber auch eine künstliche Wässerung, ein wasserlösliches Herbizid gebildet und freigesetzt, welches beim Versickern des Wassers von den Wurzeln, Samen oder Keimen aufgenommen wird, wodurch des Unkrauts abstirbt oder zumindest am Wachsen gehindert wird.

Figur 2 zeigt in schematischer Untersicht die Halteplatte 5 einer weiteren Ausführungsform eines erfindungsgemäßen Besens 1 bei dem zusätzlich zu Büscheln 2 von Borsten 4 auch Lamellen 3 vorhanden sind. Diese sind an den Ecken winklig angebracht, um bei einem Kehrstrich in die entsprechende Richtung das verschoben Material zu fokussieren, was hilfreich ist um, wie beim Kehren üblich, den Schmutz gezielt an bestimmte Stellen anzuhäufen. Borsten 4 wie Lamellen 3 enthalten ein Herbizid, z.B. Kupfer oder eine Kupferverbindung so dass der beim Kehren entstehende Abrieb bei Wässerung eine Unkrautbekämpfende Wirkung entfaltet.

Figur 3 zeigt schematische Schnitte durch zwei Arten von aus mit Herbizid versetztem Material bestehender Borsten 4, die zusätzlich eine Richtungsabhängigkeit sowohl der Biege- als auch der Abriebeigenschaften aufweisen. Ersteres wird, wie hier angedeutet, durch eine gebogene Ausführung erreicht, kann aber auch auf andere Art, z.B. durch beim Extrudieren hervorgerufene ungleichmäßige innere Verspannung erreicht werden. Eine Vorzugsrichtung, in der die Abnutzung leichter voranschreitet als in anderen kann zum Beispiel durch einen, in der Abbildung mittels schräger Linien 33 angedeuteten Schichtaufbau der Borsten erreicht werden. Es ergeben sich also zwei Vorzugsrichtungen, einmal der Elastizität 31 und einmal des Abriebs 32, welche im Allgemeinen eine beliebige Ausrichtung zueinander haben können. Es gibt jedoch nur zwei Fälle in denen diese beiden Richtungen 31, 32 kollinear sind, einmal parallel und einmal antiparallel ausgerichtet. Diese beiden Fälle sind in Figur 2 dargestellt.

### Bezugszeichenliste

- 1: Besen
- 2: Borstenbüschel
- 3: Lamelle(n)
- 4: Borste
- 5: Halteplatte
- 7: Stiel
- 10: Abrieb
- 12: Kehrstrichrichtung
- 20: Untergrund
- 21: Unkraut
- 22: Wasser
- 31: Richtung leichtester Biegung
- 32: Richtung schnellsten Abriebs
- 33: Schichtgrenzen im Borstenmaterial

## Patentansprüche

1. Besen (1) umfassend eine Mehrzahl flexibler Borsten (4) und/oder Lamellen (3),
wobei zumindest ein Teil der Borsten (4) und/oder Lamellen (3) chemische Elemente und/oder Verbindungen enthalten, so dass der beim Einsatz des Besens entstehende Abrieb (10), unter dem Einfluss natürlicher oder künstlicher Witterung, insbesondere Regen und/oder Wässerung, Stoffe freisetzt, die von herbizidaler und/oder fungizidaler Wirkung sind, wobei die wirksamen chemischen Elemente und/oder Verbindungen integrale Bestandteile der Borsten und/oder Lamellen sind,
**dadurch gekennzeichnet, dass**
zumindest einige der Borsten (4) und/oder Lamellen (3) Kupfersulfat (CuSO₄), Kupferhydroxid (Cu(OH)₂) oder Kupfersulfide (Cu₂S,CuS) enthalten.

2. Besen nach Anspruch 1, **dadurch gekennzeichnet, dass** zumindest ein Teil der Borsten (4) und/oder Lamellen (3) aus mit einem herbizidalen und/oder fungizidalen Agens oder Agenzien, insbesondere Kupfer oder geeigneten Kupferverbindungen, versetztem Kunststoff bestehen.

3. Besen nach einem der vorhergehenden Ansprüche, **dadurch gekennzeichnet, dass** zumindest ein Teil der Borsten (4) und/oder Lamellen (3) im Wesentlichen aus reinem Kupfer bestehen.

4. Besen nach einem der vorhergehenden Ansprüche, **dadurch gekennzeichnet, dass** zumindest ein Teil der Borsten (4) und/oder Lamellen (3) aus ummantelten Kupferdrähten bestehen.

5. Besen nach einem der vorhergehenden Ansprüche, **dadurch gekennzeichnet, dass** zumindest ein Teil der Borsten (4) und/oder Lamellen (3) mit Kupfer beschichtet sind.

6. Besen nach einem der vorhergehenden Ansprüche, **dadurch gekennzeichnet, dass** Borsten (4) eingesetzt sind, deren Abriebeigenschaften sich je nach Strichrichtungs unterscheiden, wobei die Borsten (4) sich in einer ersten Strichrichtung leichter abnutzen als in einer der ersten Strichrichtung entgegengesetzten Strichrichtung.

7. Besen nach dem vorhergehenden Anspruch, **dadurch gekennzeichnet, dass** Borsten (4) mit einem Aufbau aus in einer Längsrichtung der Borsten (4) wechselnden Schichten (33) verwendet sind, wobei die Schichten (33) relativ zu der Längsrichtung in einem schrägen Winkel verlaufen.

## Claims

1. Broom (1) comprising a multitude of flexible bristles (4) and/or lamellas (3),
wherein at least a part of the bristles (4) and/or lamellas (3) contains chemical elements and/or compounds, such that the wear debris (10) produced during usage of the broom releases, under the influence of natural or artificial weathering, in particular rain and/or watering, substances with a herbicidal or fungicidal effect, wherein the effective chemical elements and/or compounds are integral constituents of the bristles and/or lamellas,
**characterized in that**
at least some of the bristles (4) and/or lamellas (3) comprise copper sulfate (CuSO₄), copper hydroxide (Cu(OH)₂) or copper sulfides (Cu₂S,CuS).

2. Broom according to claim 1, **characterized in that** at least part of the bristles (4) and/or lamellas (3) are made of a plastic which is mixed with a herbicidal and/or fungicidal agent or agents, in particular copper or suitable copper compounds.

3. Broom according to one of the preceding claims, **characterized in that** at at least part of the bristles (4) and/or lamellas (3) are substantially made of pure copper.

4. Broom according to one of the preceding claims, **characterized in that** at at least part of the bristles (4) and/or lamellas (3) consist of sheathed copper wires.

5. Broom according to one of the preceding claims, **characterized in that** at at least part of the bristles (4) and/or lamellas (3) are coated with copper.

6. Broom according to one of the preceding claims, **characterized in that** bristles (4) are used of which abbrasion properties are different dependent on a stroke direction, wherein the bristles (4) wear more easily in a first stroke direction than in a stroke direction opposite to the first stroke direction.

7. Broom according to one of the preceding claims, **characterized in that** bristles (4) having a structure comprised of layers (33) changing in a longitudinal direction of the bristles (4) are used, wherein the layers (33) run in an oblique angle relative to the longitudinal direction.

## Revendications

1. Balai (1) comprenant une pluralité de poils (4) et/ou de lamelles (3) souples, dans lequel au moins certains des poils (4) et/ou des lamelles (3) contiennent des éléments et/ou des composés chimiques, de sorte que l'abrasion (10) produite lors de l'utilisation du balai, sous l'influence des intempéries naturelles ou artificielles, notamment pluie et/ou arrosage, libère des substances ayant un effet herbicide et/ou fongicide, les éléments et/ou composés chimiques actifs étant des parties intégrantes des poils et/ou des lamelles,
**caractérisé en ce que**
au moins certains des poils (4) et/ou des lamelles (3) contiennent du sulfate de cuivre (CuSO4), de l'hydroxyde de cuivre (Cu(OH)2) ou du sulfure de cuivre (Cu2S, CuS)..

2. Balai selon la revendication 1, **caractérisé en ce qu'**au moins certains des poils (4) et/ou des lamelles (3) sont constitués de matière plastique mélangée à un ou des agents herbicides et/ou fongicides, notamment du cuivre ou des composés de cuivre appropriés.

3. Balai selon l'une des revendications précédentes, **caractérisé en ce qu'**au moins certains des poils (4) et/ou des lamelles (3) sont constitués essentiellement de cuivre pur.

4. Balai selon l'une des revendications précédentes, **caractérisé en ce qu'**au moins certains des poils (4) et/ou des lamelles (3) sont constitués de fils de cuivre enrobés.

5. Balai selon l'une des revendications précédentes, **caractérisé en ce qu'**au moins certains des poils (4) et/ou des lamelles (3) sont recouverts de cuivre.

6. Balai selon l'une des revendications précédentes, **caractérisé en ce que** l'on utilise des poils (4) dont les propriétés d'abrasion diffèrent selon le sens de la ligne, les poils (4) s'usant plus facilement dans un premier sens de la ligne que dans un sens de la ligne opposé au premier sens de la ligne.

7. Balai selon la revendication précédente, **caractérisé en ce que** des poils (4) avec une structure de couches alternées (33) dans une direction longitudinale des poils (4) sont utilisés, les couches (33) s'étendant à un angle oblique par rapport à la direction longitudinale.
